# EUROPEAN PATENT SPECIFICATION

(11) **EP 3 848 553 B1**
(45) Date of publication and mention of the grant of the patent: **02.08.2023**
(21) Application number: 20217114.6
(22) Date of filing: 23.12.2020
(51) Int. Cl.: E06B 9/68, E06B 9/70, E06B 9/42, E06B 9/50, F16H 1/16, F16H 1/08

(54) **DRIVING DEVICE FOR ELECTRIC-DRIVEN ROLLER BLIND AND ELECTRIC-DRIVEN ROLLER BLIND THEREOF**
ANTRIEBSVORRICHTUNG FÜR ELEKTRISCH ANGETRIEBENEN ROLLVORHANG UND ELEKTRISCH ANGETRIEBENER ROLLVORHANG DAMIT
DISPOSITIF DE COMMANDE POUR VOLET ROULANT ÉLECTRIQUE ET VOLANT ROULANT ÉLECTRIQUE ASSOCIÉ

(30) Priority: 31.12.2019 CN 201911409918
(43) Date of publication of application: 14.07.2021
(73) Proprietor: Ningbo Sunfree Motor Technology Company Limited, Ningbo City, Zhejiang 315145 (CN)
(72) Inventor: TAN, Baoguo, Ningbo City, Zhejiang Province 315145 (CN)
(74) Representative: Cabinet Chaillot

(56) References cited:
- EP-A2- 1 223 301
- DE-U1- 29 622 535
- JP-A- 2006 177 131

## Description

### Technical Field

The present invention relates to the technical field of curtains, in particular to a driving device for an electric-driven roller blind and the electric-driven roller blind thereof.

### Background

Traditional curtains are generally hand-driven. With the development of science and technology, more and more curtains are automatized and intelligentized, and increasing electric curtains spring up in the market, such as electric-driven roller blinds. The driving device of an electric-driven roller blind mainly comprises a tubular motor, a control module and a power supply, and the driving device is often inserted into a roller tube. Among the roller blinds in the market, various tubular motors with different diameters are available, such as Φ15mm , Φ16mm , Φ18mm , Φ22mm , Φ25mm , Φ28mm and etc. Accordingly, there are many matched roller tubes with varied diameters, such as Φ18mm, Φ20mm , Φ25mm , Φ28mm , Φ32mm , Φ35mm , Φ38mm and etc. In consideration of these combinations, the manufacturing enterprises may invest more for repetitive research and development; as for downstream enterprises for assembling, the assembly efficiency is severely lowered since the products are complicated due to numerous types, and social resources are greatly wasted as a result of lack of consolidated standards.

Besides, the length of the tubular motor is relatively long, and the minimum width of the roller blinds produced is relatively large, so that these electric-driven roller blinds can't be fit into windows with relatively small widths. Meantime, due to the limited mounting space in the interior of the tubular motor, it demands higher requirements to assemble the parts therein, and in turns increasing cost. In addition, the conventional tubular motor usually adopts a combined structure of a planetary gear and a brake block, suffering the defects that the smaller the motor diameter is, the less the torque becomes, and the higher the technical requirement, and the more difficult in noise control.

DE 296 22 535 U1 discloses a driving device for an electric-driven roller blind, which comprises a control module and a power module, and it further comprises a mounting seat, a motor and a deceleration transmission assembly; the mounting seat comprises a horizontal part and a vertical part; the control module, the power module and the motor are all contained within the horizontal part of the mounting seat; the deceleration transmission assembly is placed within the vertical part of the mounting seat; the upper end of the deceleration transmission assembly is connected with the output end of the motor.

JP 2006 177131 A discloses an effective cassette type electric screen unit to a general household, especially an elderly household in an aging society, which enables a screen, a blind or the like to be easily changed and stored with ease of use, and which can be widely utilized in the educational prefession, in industry and in every walk of life. The cassette type electric screen is a cassette type that the screen or the blind is housed within a case, and is a combination of a convex type disk and a concave type disk. Then the cassette type electric screen uses a worm gear unit to prevent the hanging of the screen or the blind, and it's simple, easy to handle, user-friendly and very effective.

EP 1 223 301 A2 discloses a drive assembly for the tassels of roller shutters. The device has a plate with a slot for the belt, at least two friction rollers rotatably mounted on the plate with belt drive surfaces and coupled end gear wheels, whereby the belt passes between the rollers on an s-shaped path, a pressure device that presses the belt against the friction surface on the second roller and a drive motor coupled to one roller via a gearbox.

### Summary

One objective of the present disclosure is to overcome the shortcomings of the prior arts by providing a driving device for an electric-driven roller blind and the electric-driven roller blind thereof, and the electric-driven roller blind has the advantages of simple structure, self-locking function, convenience in assembly, low cost, capability of consolidating motors of different diameter types, and suitability for fitting windows of various sizes .

The technical solution adopted by the present invention to resolve the above problem provides a driving device for an electric-driven roller blind, which comprises a control module and a power module, and it further comprises a mounting seat, a motor and a deceleration transmission assembly; the mounting seat comprises a horizontal part and a vertical part; the control module, the power module and the motor are all contained within the horizontal part of the mounting seat; the deceleration transmission assembly is placed within the vertical part of the mounting seat; the upper end of the deceleration transmission assembly is connected with the output end of the motor.

The driving device of the invention is characterized in that the deceleration transmission assembly comprises a duplex gear worm and a worm wheel which are in transmission fit in sequence; the upper gear of the duplex gear worm fits with the output end of the motor and the lower worm of the duplex gear worm is meshed with the worm wheel and wherein the worm wheel is connected with a transmission shaft which rotates synchronously with the worm wheel.

In a preferred embodiment, the deceleration transmission assembly further comprises a duplex worm wheel gear; the duplex worm wheel gear is connected between the duplex gear worm and the output end of the motor; the upper gear of the duplex worm wheel gear fits with the output end of the motor, and the lower gear of the duplex worm wheel gear is meshed with the upper gear of the duplex gear worm.

Further, the output end of the motor is a worm, and the upper gear of the duplex worm wheel gear is a worm wheel.

Further, the output end of the motor is a helical toothed gear, and the upper gear of the duplex worm wheel gear is also a helical toothed gear.

Further, the vertical part of the mounting seat is internally provided with a first positioning cavity for installing the worm wheel and a second positioning cavity for installing the duplex gear worm; the first positioning cavity and the second positioning cavity are communicated to each other; the worm wheel is rotationally mounted in the first positioning cavity, and the duplex gear worm is rotationally mounted in the second positioning cavity.

Further, the duplex worm wheel gear is rotationally mounted at the juncture of the horizontal part and the vertical part of the mounting seat.

Further, the control module, the power module and the motor are in electrical connection.

Further, one end of the horizontal part, the end of which away from the vertical part, is provided with a connecting part by extension for connecting with a curtain mounting rack.

Further, the top of the horizontal part is a detachable cover plate, and the lateral of the vertical part is a detachable lateral plate.

Further, the mounting seat is a plastic piece.

The invention also provides an electric-driven roller blind comprising a curtain mounting rack, a roller tube, a curtain fabric, a driving head and the abovementioned driving device; one end of the curtain mounting rack is in inserted connection with the connecting part of the driving device; the driving head and the deceleration transmission assembly in the driving device are in inserted connection and rotate synchronously; one end of the roller tube is connected with and synchronously rotates with the driving head; the other end of the curtain mounting rack is connected with the other end of the roller tube through a connector; the curtain fabric is rolled on the roller tube.

Further, the deceleration transmission assembly comprises a worm wheel; the worm wheel is connected with a transmission shaft which rotates synchronously with the worm wheel, and the driving head and the transmission shaft are in inserted connection and rotate synchronously.

As compared to the prior art, the present invention has the following advantages that the motor as well as the control module and the power module are integrated on the horizontal part of the mounting seat, providing larger mounting space for the motor, lowering requirements on the parts to be assembled, reducing cost, stabilizing properties, rendering torque meet requirements of household curtains, and bringing down noise greatly. The worm wheel and the worm in the present deceleration transmission assembly has a self-locking structure, therefore, an additional brake mechanism is freed, and structure becomes simple. One motor compatible to roller tubes of various diameter types is capable of satisfying market requirements, lowering research and development input, bringing assembly convenience for downstream enterprises, simplifying structure, reducing cost and improving product competitiveness. The traditional mode of matching tubular motors of various types with roller tubes of various types can be transformed to a new mode that a motor is compatible to the roller tubes of different types, so that a large amount of social resources can be saved. Besides, in the present invention, the motor as well as the control module and the power module are integrated on the horizontal part of the mounting seat, and the deceleration transmission assembly is mounted on the vertical part of the mounting seat, so that in comparison with the existing tubular motor, when connecting with a roller tube, the length of the connecting part exposed outside the vertical part for driving the roller tube is greatly reduced, hence, the roller tube becomes shorter, and the mounted blind curtain is narrower; windows with relatively small width can also be equipped with the electric-driven roller blinds.

### Brief Description of the Drawings

Fig.1 is a schematically structural diagram of the present invention;
Fig.2 is a schematically structural diagram of the present invention, viewed from another angle;
Fig.3 is a schematic diagram of an interior structure of one embodiment of the present invention;
Fig.4 is a schematic diagram of an interior structure of another embodiment of the present invention;
Fig. 5 is an exploded view of Fig.4;
Fig.6 is a schematically structural diagram of an electric-driven roller blind of the present invention;
Fig.7 is an exploded view of the electric-driven roller blind of the present invention.

The numerals represent: 1 mounting seat; 2 motor; 3 transmission shaft; 4 horizontal part; 5 vertical part; 6 duplex worm wheel gear; 7 duplex gear worm; 8 worm wheel; 9 output end; 10 first positioning cavity; 11 second positioning cavity; 12 first mounting cavity; 13 second mounting cavity; 14 connecting part; 15 cover plate; 16 lateral plate; 17 curtain mounting rack; 18 roller tube; 19 curtain fabric; 20 connector; 21 driving head; 22 mounting hole.

### Embodiments

The present invention will be further explained by referring to the particular embodiments.

In the description of the invention, it should be understood that, all directional or positional relationships indicated by the terms including "center", "longitudinal direction", "transverse direction", "length", "width", "thickness", "upper", "lower", "front", "back", "left", "right", "vertical", "horizontal", "top", "bottom", "inside", "outside", "clockwise", "anticlockwise", "axial direction", "radial direction", "circumferential direction" and the like are merely for the purpose of conveniently and simply describing the present invention, instead of indicating or hinting the device or component referred to must have the particular orientation or be structured and operated at the particular orientation, and thus cannot be read to limitations to the present invention.

Besides, the terms "first" and "second" are merely for descriptive purpose, and thus cannot be understood as indicating or hinting relative importance or implying the quantity of the mentioned technical features. Therefore, the features defined by the terms "first" and "second" may explicitly or implicitly comprise at least one such feature. In the description of the present invention, the wording "a plurality of" means at least two, e.g., two, three or the like unless otherwise clearly defined.

In the present invention, unless otherwise clearly stipulated, the terms "mount", "link", "connect", "fix" and the like should be understood in a broad sense, e.g., fixed connection, detachable connection or integral connection; or mechanical connection, or electrical connection; or direct connection, or indirect connection via a medium. It may further refer to interior communication or interaction of two components unless otherwise explicitly defined. For those of ordinary skill in the art, its particular meanings can be understood depending on the particular contexts.

In the present invention, unless otherwise clearly stipulated, the expression that a first feature is "above" or "below" a second feature may mean that the first and second features are in direct contact, or in indirect contact via a medium. Moreover, the expression that the first feature is "over", "above" or on the "top" of the second feature may mean that the first feature is over or above the second feature, or the first feature is merely higher than the second feature in the horizontal height. The expression that the first feature is "under", "below" or on the "bottom" of the second feature may mean that the first feature is under or below the second feature, or the first feature is merely shorter than the second feature in the horizontal height.

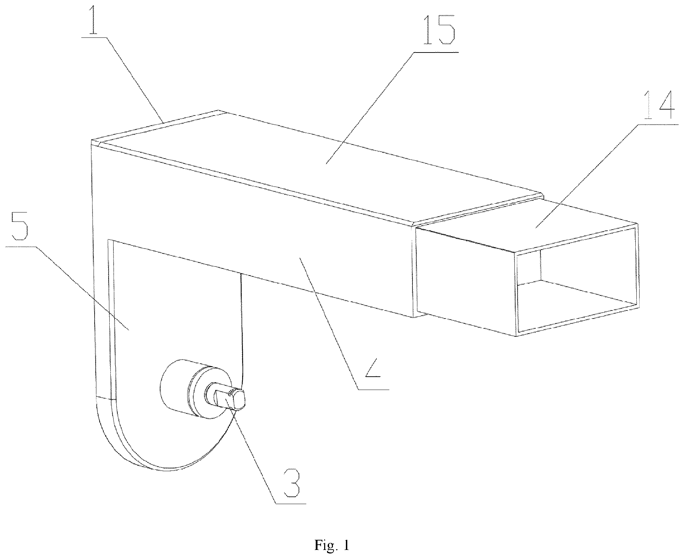

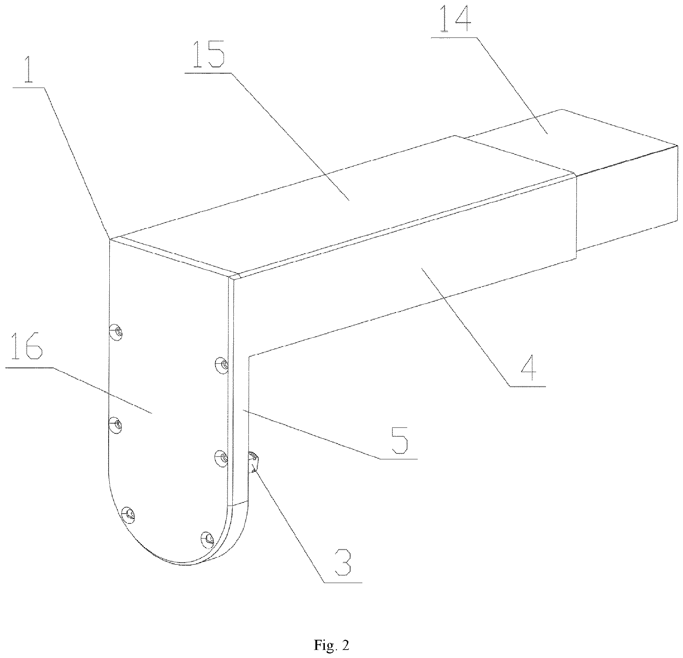

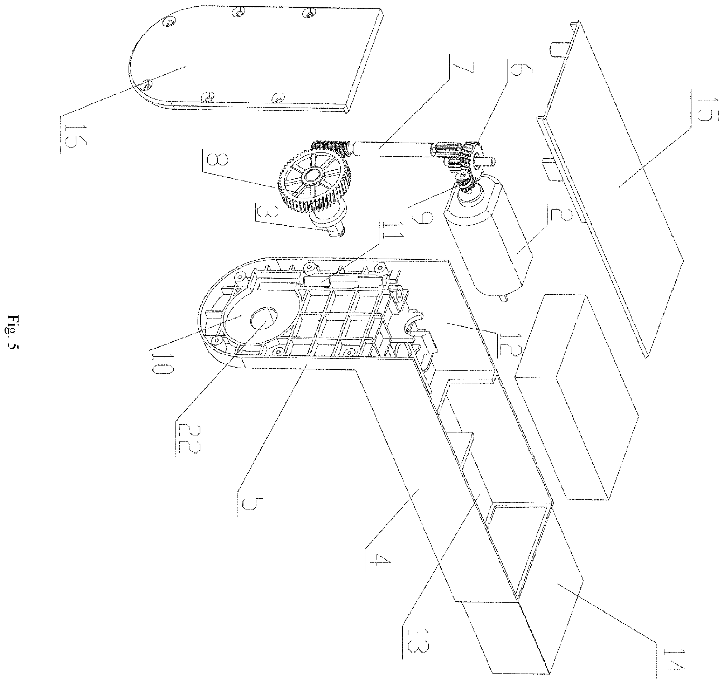

Referring to Figs. 1-5, the present invention discloses a driving device for an electric-driven roller blind, comprising a control module and a power module, further comprising a mounting seat 1, a motor 2 and a deceleration transmission assembly. The mounting seat 1 comprises a horizontal part 4 and a vertical part 5. The horizontal part 4 is vertical to the vertical part 5, and interiors of the two are communicated. The control module, the power module and the motor 2 are all contained within the horizontal part 4 of the mounting seat 1. The control module, the power module and the motor 2 are in electrical connection. The horizontal part 4 is internally provided with a first mounting cavity 12 for limiting the motor 2 and a second mounting cavity 13 for limiting the control module and the power module. The first mounting cavity 12 and the second mounting cavity 13 play a role in limited installation of the motor 2, the control module and the power module so as to prevent free movement of the motor 2, the control module and the power module, thereby ensuring normal operation of the driving device. The motor 2 as well as the control module and the power module are respectively arranged in the first mounting cavity 12 and the second mounting cavity 13, so their respective mounting space becomes large, requirements on the parts to be assembled are low, cost is low, and properties are stable. The deceleration transmission assembly is contained within the vertical part 5 of the mounting seat 1. The upper end of the deceleration transmission assembly is connected with the output end 9 of the motor 2. The deceleration transmission assembly can retard driving of the motor 2 so as to ensure steady lifting of the roller blind.

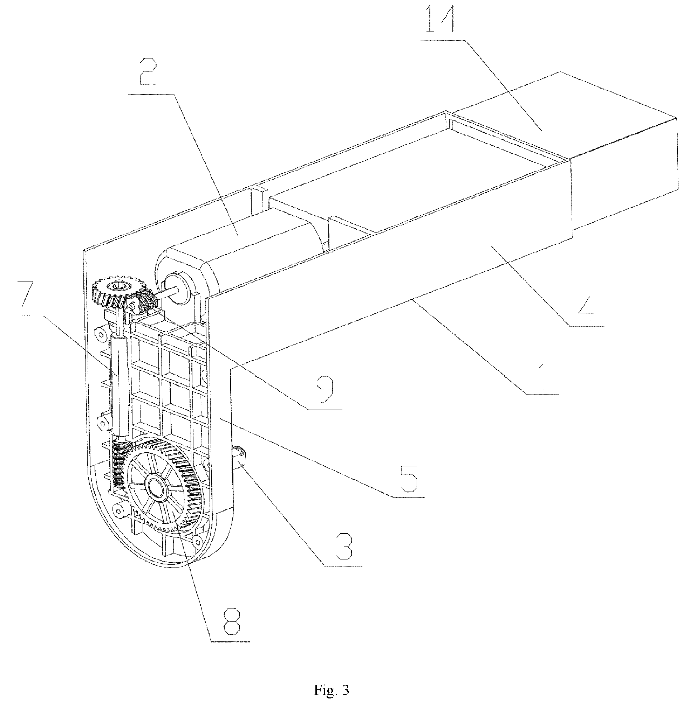

Referring to Fig.3, the deceleration transmission assembly comprises a duplex gear worm 7 and a worm wheel 8 that are in successive drive fit. The upper gear of the duplex gear worm 7 fits with the output end 9 of the motor 2. The lower worm of the duplex gear worm 7 is meshed with the worm wheel 8. The worm wheel 8 is connected with a transmission shaft 3 synchronously rotating therewith. The transmission shaft 3 is used for connecting with a driving head 21 outside and driving the driving head 21 to synchronously rotate. The driving head 21 is used for connecting with a roller tube 18 and driving the roller tube 18 to synchronously rotate. Preferably, the output end 9 of the motor 2 is a worm, and the upper gear of the duplex gear worm 7 is a worm wheel. Or, the output end 9 of the motor 2 is a helical toothed gear, and the upper gear of the duplex gear worm 7 is also a helical toothed gear. Therefore, when the motor 2 operates, the motor 2 drives the duplex gear worm 7 to rotate, the lower worm of the duplex gear worm 7 drives the worm wheel 8 to rotate, the worm wheel 8 propels the driving head 21 to synchronously rotate via the transmission shaft 3, and the driving head 21 drives the roller tube 18 to rotate so as to control lifting of the roller blind.

The worm wheel and worm in the deceleration transmission assembly of the present invention has a self-locking structure, therefore, an additional brake mechanism is freed, and structure becomes simple. Moreover, as compared to drive of the tubular motor of prior design, the motor 2 is arranged on the horizontal part 4, the deceleration transmission assembly is arranged on the vertical part 5, and the vertical part 5 of the mounting seat 1 is provided with a transmission shaft 3 in an exposed manner for connecting with a driving head 21 for driving a roller tube 18. Therefore, by virtue of the deceleration transmission assembly to transfer a force, one motor compatible to roller tubes of various diameter types is capable of satisfying market requirements, lowering research and development input and bringing assembly convenience for downstream enterprises. By transforming the traditional mode of matching tubular motors of various diameter types with roller tubes of various diameter types into a mode that one motor is compatible to the roller tubes of different types, a large amount of social resources can be saved. Besides, the vertical part 5 of the mounting seat 1 is provided with a transmission shaft 3 in an exposed manner for connecting with a driving head 21 for driving a roller tube 18, such that as compared to the existing tubular motor in connecting with a roller tube, length of the connecting part exposed outside the vertical part 5 for driving the roller tube 18 is greatly reduced, therefore, the roller tube 18 becomes shorter, the mounted blind curtain is narrower, windows with smaller widths can be equipped with the electric-driven roller blinds, consequently, the electric-driven roller blinds can be adaptively mounted on the windows of various sizes.

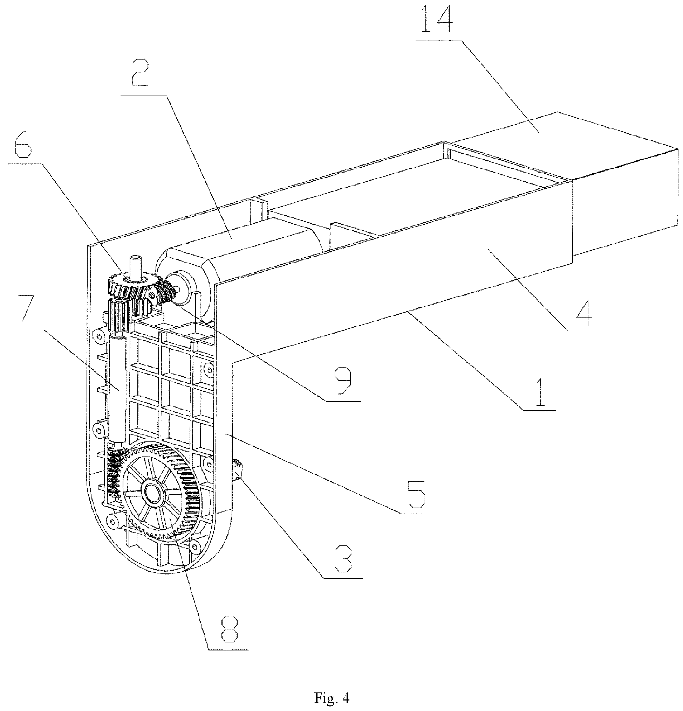

Referring to Figs.4-5, the deceleration transmission assembly also comprises a duplex worm wheel gear 6. The duplex worm wheel gear 6 is connected between the duplex gear worm 7 and the output end 9 of the motor 2. The upper gear of the duplex worm wheel gear 6 fits with the output end 9 of the motor 2. The lower gear of the duplex worm wheel gear 6 is meshed with the upper gear of the duplex gear worm 7. The diameter of the upper gear of the duplex worm wheel gear 6 is greater than that of the lower gear of the duplex worm wheel gear 6. Due to the arranged duplex worm wheel gear 6, for one thing, the whole deceleration transmission assembly is smooth in transmission, and a self-locking effect is good; for another thing, the gap between the duplex gear worm 7 and the output end 9 of the motor 2 is filled up such that diameter of the upper gear of the duplex gear worm 7 becomes smaller, thereby narrowing the duplex gear worm 7, thinning the mounting space of the duplex gear worm 7 on the vertical part 5 of the mounting seat 1, thinning the vertical part 5 of the mounting seat 1, and reducing the air gap between the curtain fabric and a window frame after the roller blind is mounted so as to provide a good shading effect.

As a preferred embodiment, the output end 9 of the motor 2 is a worm, the upper gear of the duplex worm wheel gear 6 is a worm, the lower gear of the duplex worm wheel gear 6 is a spur gear, and the upper gear of the duplex gear worm 7 is a spur gear, therefore, the deceleration transmission assembly is smooth in transmission.

As a preferred embodiment, the output end 9 of the motor 2 is a helical toothed gear, the upper gear of the duplex worm wheel gear 6 is a helical toothed gear, the lower gear of the duplex worm wheel gear 6 is a spur gear, and the upper gear of the duplex gear worm 7 is a spur gear. As a further preferred embodiment, the helical toothed gear is a bevel gear, so the deceleration transmission assembly is smooth in transmission.

When the motor 2 operates, the motor 2 drives the duplex worm wheel gear 6 to rotate, the lower gear of the duplex worm wheel gear 6 drives the upper gear of the duplex gear worm 7 to propel the duplex gear worm 7 to rotate, the lower worm of the duplex gear worm 7 drives the worm wheel 8 to rotate, the worm wheel 8 propels the driving head 21 to synchronously rotate via the transmission shaft 3, the driving head 21 drives the roller tube 18 to rotate so as to control lifting of the roller blind. Assisted transmission of the duplex worm wheel gear 6, the duplex gear worm 7 and the worm wheel 8 plays a gearing-down effect, thus the whole transmission process of the driving device is ensured to be steady, and the roller blind is steady in lifting.

The vertical part 5 of the mounting seat 1 is internally provided with a first positioning cavity 10 for containing the worm wheel 8 and a second positioning cavity 11 for containing the duplex gear worm 7. The first positioning cavity 10 and the second positioning cavity 11 are communicated to each other. The worm wheel 8 is rotationally mounted in the first positioning cavity 10. The center of the first positioning cavity 10 is provided with a mounting hole 22 through which the transmission shaft 3 penetrates. The duplex gear worm 7 is rotationally mounted in the second positioning cavity 11. The duplex worm wheel gear 6 is rotationally disposed at the juncture of the horizontal part 4 and the vertical part 5 of the mounting seat 1. Owing to the above-mentioned structure, the duplex worm wheel gear 6, the duplex gear worm 7 and the worm wheel 8 are protected and located and ensured to steadily operate in the transmission process, thereby ensuring smooth lifting of the roller blind. Additionally, the duplex worm wheel gear 6 is rotationally disposed at the juncture of the horizontal part 4 and the vertical part 5 of the mounting seat 1, and the duplex worm wheel gear 6 is also connected between the duplex gear worm 7 and the output end 9 of the motor 2, therefore, it not only plays a transitional transmission effect, but also enables the diameter of the upper gear of the duplex gear worm 7 to be smaller, thereby narrowing the duplex gear worm 7, thinning the mounting space of the duplex gear worm 7 on the vertical part 5 of the mounting seat 1, thinning the vertical part 5 of the mounting seat 1, and reducing the air gap between the curtain fabric and a window frame after the roller blind is mounted so as to provide a good shading effect.

One end of the horizontal part 4 away from the vertical part 5 is provided with a connecting part 14 by extension for connecting with a curtain mounting rack 17. The connecting part 14 is used for inserted connection with the curtain mounting rack 17, the assembly and disassembly are convenient, and the assembly efficiency is improved.

The top of the horizontal part 4 is a detachable cover plate 15. The lateral of the vertical part 5 is a detachable lateral plate 16. The detachable cover plate 15 and the detachable lateral plate 16 bring convenience to disassembly and assembly and maintenance of parts in the mounting seat 1. Preferably, the cover plate 15 and the horizontal part 4 are clamped, buckled or fastened via screws, and the lateral plate 16 and the vertical part 5 are clamped, buckled or fastened via screws.

Further, the mounting seat 1 is a plastic piece. On the one hand, the plastic piece has an insulated effect, being safe and reliable; and on the other hand, in the process of wirelessly controlling the electric-driven roller blind, the plastic piece is free of signal shielding, so the control module can well receive wireless control signals.

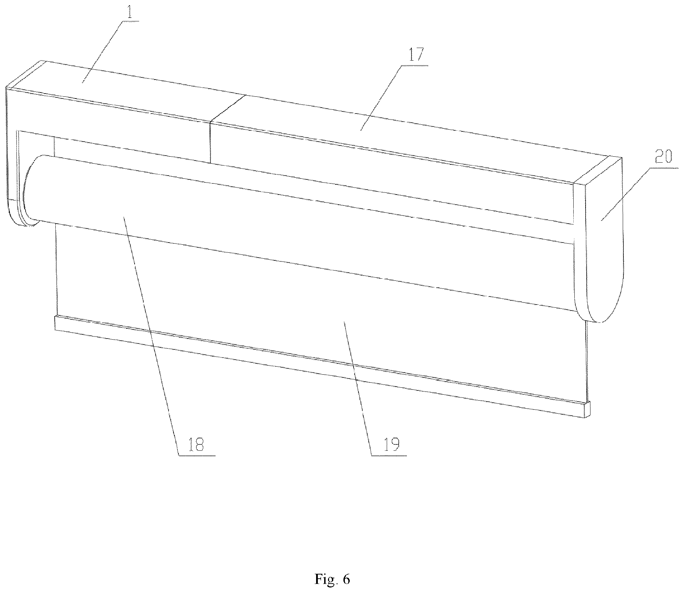

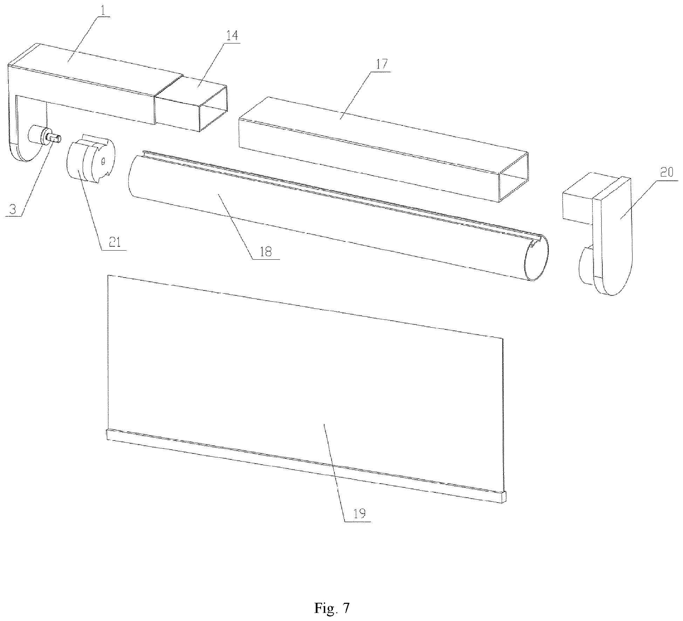

Referring to Figs.6-7, an electric-driven roller blind comprises a curtain mounting rack 17, a roller tube 18, a curtain fabric 19, a driving head 21 and the abovementioned driving device. One end of the curtain mounting rack 17 is in inserted connection with the connecting part 14 of the driving device. The driving head 21 and the deceleration transmission assembly in the driving device are in inserted connection and synchronously rotate. One end of the roller tube 18 is connected with and synchronously rotates with the driving head 21. The other end of the curtain mounting rack 17 is connected with the other end of the roller tube 18 via a connector 20. The curtain fabric 19 is rolled on the roller tube 18.

The deceleration transmission assembly comprises a worm wheel 8. The worm wheel 8 is connected with a transmission shaft 3 synchronously rotating therewith. The driving head 21 and the transmission shaft 3 are in inserted connection and synchronously rotate.

In use, a remote controller transmits a signal to the control module, the control module controls the motor 2 to operate, the motor 2 drives the duplex worm wheel gear 6 to rotate, the lower gear of the duplex worm wheel gear 6 drives the upper gear of the duplex gear worm 7 to propel the duplex gear worm 7 to rotate, the lower worm of the duplex gear worm 7 drives the worm wheel 8 to rotate, the worm wheel 8 propels the driving head 21 to synchronously rotate via the transmission shaft 3, and the driving head 21 propels the roller tube 18 to rotate, achieving electric lifting of the roller blind. The power module and the motor 2 are available in the market, and the control module is also comprised by circuits and electric elements that can be purchased from the market, so any detailed description about them is not repeated any more.

It should be noted that, the above embodiments are merely illustrative, rather than restrictive, to the technical solutions of the present invention. Although the present invention has been explained in detail with reference to the above embodiments, it should be understood by those skilled in the art that, modifications to the technical solutions of the embodiments or even equivalent substitutions for partial technical features therein are possible within the scope of the appended claims.

## Claims

1. A driving device for an electric-driven roller blind, comprising a control module and a power module, wherein it further comprises a mounting seat (1), a motor (2) and a deceleration transmission assembly; the mounting seat (1) comprises a horizontal part (4) and a vertical part (5) ; the control module, the power module and the motor (2) are all contained within the horizontal part (4) of the mounting seat (1); the deceleration transmission assembly is placed within the vertical part (5) of the mounting seat (1); the upper end of the deceleration transmission assembly is connected with the output end (9) of the motor (2),
**characterized in that**
the deceleration transmission assembly comprises a duplex gear worm (7) and a worm wheel (8) which are in transmission fit in sequence; the upper gear of the duplex gear worm (7) fits with the output end (9) of the motor (2) and the lower worm of the duplex gear worm (7) is meshed with the worm wheel (8) and
wherein the worm wheel (8) is connected with a transmission shaft (3) which rotates synchronously with the worm wheel (8).

2. The driving device for an electric-driven roller blind of claim 1, wherein the deceleration transmission assembly further comprises a duplex worm wheel gear (6); the duplex worm wheel gear (6) is connected between the duplex gear worm (7) and the output end (9) of the motor (2); the upper gear of the duplex worm wheel gear (6) fits with the output end (9) of the motor (2), and the lower gear of the duplex worm wheel gear (6) is meshed with the upper gear of the duplex gear worm (7).

3. The driving device for an electric-driven roller blind of claim 2, wherein the output end (9) of the motor (2) is a worm, and the upper gear of the duplex worm wheel gear (6) is a worm wheel.

4. The driving device for an electric-driven roller blind of claim 2, wherein the output end (9) of the motor (2) is a helical toothed gear, and the upper gear of the duplex worm wheel gear (6) is also a helical toothed gear.

5. The driving device for an electric-driven roller blind of claim 2, wherein the vertical part (5) of the mounting seat (1) is internally provided with a first positioning cavity (10) for installing the worm wheel (8) and a second positioning cavity (11) for installing the duplex gear worm (7); the first positioning cavity (10) and the second positioning cavity (11) are communicated to each other; the worm wheel (8) is rotationally mounted in the first positioning cavity (10), and the duplex gear worm (7) is rotationally mounted in the second positioning cavity (11).

6. The driving device for an electric-driven roller blind of claim 2, wherein the duplex worm wheel gear (6) is rotationally mounted at the juncture of the horizontal part (4) and the vertical part (5) of the mounting seat (1).

7. The driving device for an electric-driven roller blind of claim 1, wherein the control module, the power module and the motor (2) are in electrical connection.

8. The driving device for an electric-driven roller blind of claim 1, wherein one end of the horizontal part (4), the end of which away from the vertical part (5), is provided with a connecting part (14) by extension for connecting with a curtain mounting rack (17).

9. The driving device for an electric-driven roller blind of claim 1, wherein the top of the horizontal part (4) is a detachable cover plate (15), and the lateral of the vertical part (5) is a detachable lateral plate (16).

10. The driving device for an electric-driven roller blind of any one of claims 1-9, wherein the mounting seat (1) is a plastic piece.

11. An electric-driven roller blind, wherein it comprises a curtain mounting rack (17), a roller tube (18), a curtain fabric (19), a driving head (21) and the driving device of any one of claims 1-10; one end of the curtain mounting rack (17) is in inserted connection with the connecting part (14) of the driving device; the driving head (21) and the deceleration transmission assembly in the driving device are in inserted connection and rotate synchronously; one end of the roller tube (18) is connected with and synchronously rotates with the driving head (21); the other end of the curtain mounting rack (17) is connected with the other end of the roller tube (18) through a connector (20); the curtain fabric (19) is rolled on the roller tube (18).

12. The electric-driven roller blind of claim 11, wherein the deceleration transmission assembly comprises a worm wheel (8); the worm wheel (8) is connected with a transmission shaft (3) which rotates synchronously with the worm wheel (8), and the driving head (21) and the transmission shaft (3) are in inserted connection and rotate synchronously.

## Patentansprüche

1. - Antriebsvorrichtung für elektrisch angetriebenen Rollvorhang, umfassend ein Steuermodul und ein Leistungsmodul, wobei sie weiter einen Montagesitz (1), einen Motor (2) und eine Bremsübertragungseinheit umfasst; der Montagesitz (1) einen horizontalen Teil (4) und einen vertikalen Teil (5) umfasst; das Steuermodul, das Leistungsmodul und der Motor (2) alle im horizontalen Teil (4) des Montagesitzes (1) enthalten sind; die Bremsübertragungseinheit innerhalb des vertikalen Teils (5) des Montagesitzes (1) platziert ist; das obere Ende der Bremsübertragungseinheit mit dem Ausgabeende (9) des Motors (2) verbunden ist,
**dadurch gekennzeichnet, dass**
die Bremsübertragungseinheit eine doppelte Getriebeschnecke (7) und ein Schneckenrad (8) umfasst, die bei Übertragung in Reihe angeordnet sind; das obere Getriebe der doppelten Getriebeschnecke (7) zum Ausgabeende (9) des Motors (2) passt und die untere Schnecke der doppelten Getriebeschnecke (7) mit dem Schneckenrad (8) in Eingriff gebracht ist, und
wobei das Schneckenrad (8) mit einer Übertragungswelle (3) verbunden ist, die sich synchron mit dem Schneckenrad (8) dreht.

2. - Antriebsvorrichtung für elektrisch angetriebenen Rollvorhang nach Anspruch 1, wobei die Bremsübertragungseinheit weiter ein doppeltes Schneckenradgetriebe (6) umfasst; das doppelte Schneckenradgetriebe (6) zwischen der doppelten Getriebeschnecke (7) und dem Ausgabeende (9) des Motors (2) verbunden ist; das obere Getriebe des doppelten Schneckenradgetriebes (6) zum Ausgabeende (9) des Motors (2) passt und das untere Getriebe des doppelten Schneckenradgetriebes (6) mit dem oberen Getriebe der doppelten Getriebeschnecke (7) in Eingriff gebracht ist.

3. - Antriebsvorrichtung für elektrisch angetriebenen Rollvorhang nach Anspruch 2, wobei das Ausgabeende (9) des Motors (2) eine Schnecke ist und das obere Getriebe des doppelten Schneckenradgetriebes (6) ein Schneckenrad ist.

4. - Antriebsvorrichtung für elektrisch angetriebenen Rollvorhang nach Anspruch 2, wobei das Ausgabeende (9) des Motors (2) ein spiralförmiges Zahnrad ist und das obere Getriebe des doppelten Schneckenradgetriebes (6) ebenfalls ein spiralförmiges Zahnrad ist.

5. - Antriebsvorrichtung für elektrisch angetriebenen Rollvorhang nach Anspruch 2, wobei der vertikale Teil (5) des Montagesitzes (1) im Inneren mit einem ersten Positionierungshohlraum (10) ausgestattet ist, um das Schneckenrad (8) zu installieren, und einem zweiten Positionierungshohlraum (11), um die doppelte Getriebeschnecke (7) zu installieren; der erste Positionierungshohlraum (10) und der zweite Positionierungshohlraum (11) miteinander verbunden sind; das Schneckenrad (8) drehbar im ersten Positionierungshohlraum (10) montiert ist und die doppelte Getriebeschnecke (7) drehbar im zweiten Positionierungshohlraum (11) montiert ist.

6. - Antriebsvorrichtung für elektrisch angetriebenen Rollvorhang nach Anspruch 2, wobei das doppelte Schneckenradgetriebe (6) drehbar an der Verbindungsstelle des horizontalen Teils (4) und des vertikalen Teils (5) des Montagesitzes (1) montiert sind.

7. - Antriebsvorrichtung für elektrisch angetriebenen Rollvorhang nach Anspruch 1, wobei das Steuermodul, das Leistungsmodul und der Motor (2) in elektrischer Verbindung sind.

8. - Antriebsvorrichtung für elektrisch angetriebenen Rollvorhang nach Anspruch 1, wobei ein Ende des horizontalen Teils (4), dessen Ende vom vertikalen Teil (5) entfernt ist, mit einem Verbindungsteil durch Erweiterung (14) ausgestattet ist, um mit einem Vorhangmontagegestell (17) verbunden zu sein.

9. - Antriebsvorrichtung für elektrisch angetriebenen Rollvorhang nach Anspruch 1, wobei die obere Seite des horizontalen Teils (4) eine abnehmbare Deckplatte (15) ist und die Seite des vertikalen Teils (5) eine abnehmbare laterale Platte (16) ist.

10. - Antriebsvorrichtung für elektrisch angetriebenen Rollvorhang nach einem der Ansprüche 1 - 9, wobei der Montagesitz (1) ein Plastikstück ist.

11. - Elektrisch angetriebener Rollvorhang, wobei er ein Vorhangsmontagegestell (17), ein Wickelrohr (18), ein Vorhanggewebe (19), einen Antriebskopf (21) und die Antriebsvorrichtung nach einem der Ansprüche 1 - 10 umfasst; ein Ende des Vorhangsmontagegestells (17) in eingeführter Verbindung mit dem Verbindungsteil (14) der Antriebsvorrichtung ist; der Antriebskopf (21) und die Bremsübertragungseinheit in der Antriebsvorrichtung in eingeführter Verbindung sind und sich synchron drehen; ein Ende des Wickelrohrs (18) mit dem Antriebskopf (21) verbunden ist und sich synchron damit dreht; das andere Ende des Vorhangsmontagegestells (17) mit dem anderen Ende des Wickelrohrs (18) durch einen Verbinder (20) verbunden ist; das Vorhanggewebe (19) auf das Wickelrohr (18) gerollt ist.

12. - Elektrisch angetriebener Rollvorhang nach Anspruch 11, wobei die Bremsübertragungseinheit ein Schneckenrad (8) umfasst; das Schneckenrad (8) mit einer Übertragungswelle (3) verbunden ist, die sich synchron mit dem Schneckenrad (8) dreht, und der Antriebskopf (21) und die Übertragungswelle (3) in eingeführter Verbindung sind und sich synchron drehen.

## Revendications

1. - Dispositif d'entraînement pour un store à rouleau à commande électrique, comprenant un module de commande et un module d'alimentation, comprenant en outre un siège de montage (1), un moteur (2) et un ensemble transmission à décélération ; le siège de montage (1) comprenant une partie horizontale (4) et une partie verticale (5) ; le module de commande, le module d'alimentation et le moteur (2) étant tous contenus à l'intérieur de la partie horizontale (4) du siège de montage (1) ; l'ensemble transmission à décélération étant placé à l'intérieur de la partie verticale (5) du siège de montage (1) ; l'extrémité supérieure de l'ensemble transmission à décélération étant reliée à l'extrémité de sortie (9) du moteur (2),
**caractérisé par le fait que**
l'ensemble transmission à décélération comprend une vis à double engrenage (7) et une roue à vis (8) qui sont montées en transmission de manière séquentielle ; l'engrenage supérieur de la vis à double engrenage (7) est en prise avec l'extrémité de sortie (9) du moteur (2) et la vis inférieure de la vis à double engrenage (7) engrène la roue à vis (8), et
la roue à vis (8) est reliée à un arbre de transmission (3) qui tourne de manière synchrone avec la roue à vis (8).

2. - Dispositif d'entraînement pour un store à rouleau à commande électrique selon la revendication 1, dans lequel l'ensemble transmission à décélération comprend en outre un engrenage à double roue à vis (6) ; l'engrenage à double roue à vis (6) est relié entre la vis à double engrenage (7) et l'extrémité de sortie (9) du moteur (2) ; l'engrenage supérieur de l'engrenage à double roue à vis (6) est en prise avec l'extrémité de sortie (9) du moteur (2), et l'engrenage inférieur de l'engrenage à double roue à vis (6) engrène l'engrenage supérieur de la vis à double engrenage (7).

3. - Dispositif d'entraînement d'un store à rouleau à commande électrique selon la revendication 2, dans lequel l'extrémité de sortie (9) du moteur (2) est une vis sans fin, et l'engrenage supérieur de l'engrenage à double roue à vis (6) est une roue à vis.

4. - Dispositif d'entraînement d'un store à rouleau à commande électrique selon la revendication 2, dans lequel l'extrémité de sortie (9) du moteur (2) est un engrenage à denture hélicoïdale, et l'engrenage supérieur de l'engrenage à double roue à vis (6) est également un engrenage à denture hélicoïdale.

5. - Dispositif d'entraînement d'un store à rouleau à commande électrique selon la revendication 2, dans lequel la partie verticale (5) du siège de montage (1) comporte intérieurement une première cavité de positionnement (10) pour installer la roue à vis (8) et une seconde cavité de positionnement (11) pour installer la vis à double engrenage (7) ; la première cavité de positionnement (10) et la seconde cavité de positionnement (11) communiquent l'une avec l'autre ; la roue à vis (8) est montée de manière rotative dans la première cavité de positionnement (10), et la vis à double engrenage (7) est montée de manière rotative dans la seconde cavité de positionnement (11).

6. - Dispositif d'entraînement d'un store à rouleau à commande électrique selon la revendication 2, dans lequel l'engrenage à double roue à vis (6) est monté de manière rotative à la jonction de la partie horizontale (4) et de la partie verticale (5) du siège de montage (1).

7. - Dispositif d'entraînement d'un store à rouleau à commande électrique selon la revendication 1, dans lequel le module de commande, le module d'alimentation et le moteur (2) sont reliés électriquement.

8. - Dispositif d'entraînement d'un store à rouleau à commande électrique selon la revendication 1, dans lequel une extrémité de la partie horizontale (4), dont l'extrémité est à distance de la partie verticale (5), comporte une pièce de liaison (14) en extension pour liaison à un support de montage de store (17).

9. - Dispositif d'entraînement d'un store à rouleau à commande électrique selon la revendication 1, dans lequel le dessus de la partie horizontale (4) est une plaque de recouvrement détachable (15), et le côté de la partie verticale (5) est une plaque latérale détachable (16) .

10. - Dispositif d'entraînement d'un store à rouleau à commande électrique selon l'une quelconque des revendications 1 à 9, dans lequel le siège de montage (1) est une pièce en matière plastique.

11. - Store à rouleau à commande électrique, comprenant un support de montage de store (17), un tube de rouleau (18), un tissu de store (19), une tête d'entraînement (21) et le dispositif d'entraînement selon l'une quelconque des revendications 1 à 10 ; une extrémité du support de montage de store (17) est en liaison d'introduction avec la partie de liaison (14) du dispositif d'entraînement ; la tête d'entraînement (21) et l'ensemble transmission à décélération dans le dispositif d'entraînement sont en liaison d'introduction et tournent de manière synchrone ; une extrémité du tube de rouleau (18) est reliée à la tête d'entraînement (21) et tourne de manière synchrone avec celle-ci ; l'autre extrémité du support de montage de store (17) est reliée à l'autre extrémité du tube de rouleau (18) par l'intermédiaire d'un raccord (20) ; le tissu de store (19) s'enroule sur le tube de rouleau (18).

12. - Store à rouleau à commande électrique selon la revendication 11, dans lequel l'ensemble transmission à décélération comprend une roue à vis (8) ; la roue à vis (8) est reliée à un arbre de transmission (3) qui tourne de manière synchrone avec la roue à vis (8), et la tête d'entraînement (21) et l'arbre de transmission (3) sont en liaison d'introduction et tournent de manière synchrone.
